Europäisches Patentamt

European Patent Office

Office européen des brevets

(11) Veröffentlichungsnummer: **0 367 908**

**A1**

(12) # EUROPÄISCHE PATENTANMELDUNG

(21) Anmeldenummer: 89113605.3

(22) Anmeldetag: 24.07.89

(51) Int. Cl.⁵: **E06B 3/54, E04B 2/96**

(30) Priorität: 28.10.88 DE 3836818
16.03.89 DE 3908720

(43) Veröffentlichungstag der Anmeldung:
16.05.90 Patentblatt 90/20

(84) Benannte Vertragsstaaten:
FR GB NL

(71) Anmelder: **Josef Gartner & Co.**
**Postfach 20/40**
**D-8883 Gundelfingen(DE)**

(72) Erfinder: **Der Erfinder hat auf seine Nennung**
**verzichtet**

(74) Vertreter: **Patentanwälte Deufel- Schön-**
**Hertel- Lewald- Otto**
**Isartorplatz 6**
**D-8000 München 2(DE)**

(54) **Rahmenlose Verglasung.**

(57) Um eine Scheibe (26) aus Einscheibensicherheitsglas daran zu hindern, im Brandfall, d.h. bei Versagen einer tragenden Versiegelung (20) zwischen der Scheibe (26) und einem Fassadenprofil (10), im ganzen von der Fassade herabzufallen, sind Absturzsicherungen (34) vorgesehen. In der Scheibe (26) sind konische oder abgestufte Durchgangsbohrungen (36) ausgebildet, in welchen ensprechend konische oder abgestufte Metallbolzen (38) aufgenommen sind. Die Metallbolzen (38) sind über Drähte (44) lose an dem Fassadentragprofil (10) befestigt, so daß die Scheibe (26) normale Bewegungen infolge thermischer Einflüsse oder infolge von Windbelastungen durchführen kann, ohne daß eine Zwängungsgefährdung an den Rändern der Scheibe eintreten kann. Damit die Absturzsicherungen (34) von außen nicht sichtbar sind, ist an der Außenseite der Scheibe (26) eine beschichtete Floatglasscheibe (30) angeordnet. Zwischen der Floatglasscheibe (30) und der Scheibe (26) aus ESG kann eine Folie (28) vorgesehen sein, so daß sich insgesamt eine Verbundsicherheitsverglasung ergibt.

FIG.1

## RAHMENLOSE VERGLASUNG

Die Erfindung betrifft eine rahmenlose Verglasung (structural glazing), bestehend aus einer Scheibe aus Einscheiben-Sicherheitsglas (ESG) oder aus teilvorgespanntem Glas (TVG) allein oder kombiniert mit einer oder mehreren Scheiben aus Floatglas, wobei die TVG- oder ESG-Scheibe insbesondere an der Außenseite der Verglasung angeordnet ist, und wobei die Befestigung über tragende Versiegelungen an Fassadentragprofilen erfolgt.

Bei der Ausbildung von rahmenlosen Verglasungen mit ESG-Scheiben oder mit teilweise vorgespanntem Glas, die eine bedeutend größere Festigkeit und eine höhere Temperaturgradientenbeständigkeit aufweisen als Scheiben aus Floatglas, besteht die Gefahr, daß im Brandfall die Scheiben nicht zerstört werden und bei Versagen der tragenden Versiegelungen im ganzen von einem Gebäude herabfallen können, so daß eine Gefährdung von Personen und Sachen möglich ist. Um dies zu verhindern sind zahlreiche Vorkehrungen bekannt, jedoch weisen diese den Nachteil auf, daß sie häufig von außen sichtbar sind, so daß der Gesamteindruck der Fassade gestört wird. Ferner sind Vorkehrungen bekannt, durch welche gewährleistet wird, daß im Brandfall vor Erreichen eines Temperaturgradienten von 150 K an der ESG- oder TVG-Scheibe eine Zerstörung der Scheibe erfolgt, so daß diese in Bruchstücken von der Fassade herabfällt.

Der Erfindung liegt die Aufgabe zugrunde, eine rahmenlose Verglasung derart auszubilden, daß die Scheibe oder die Scheiben aus Einscheibensicherheitsglas (ESG) im Brandfall, d.h. bei Versagen der tragenden Versiegelung, gegen Absturz gesichert sind.

Diese Aufgabe wird erfindungsgemäß dadurch gelöst, daß in der Scheibe aus ESG oder TVG mindestens ein Bolzen aus nicht brennbarem oder hitzebeständigem Material formschlüssig angeordnet ist, daß der Bolzen über einen Draht od.dgl. lose und ohne starre Verbindung an einem Fassadentragprofil befestigt ist, und daß an der Außenseite der ESG- oder TVG-Scheibe eine Floatglasscheibe angeklebt ist.

Durch die Anordnung von hitzebeständigen Bolzen wird eine Absturzsicherung der ESG-Scheibe beispielsweise im Brandfall erreicht, wenn die tragende Versiegelung versagt. Durch die punktweise Anordnung von hitzebeständigen oder nicht brennbaren Bolzen wird die Wärmedämmung einer Verglasung nicht wesentlich beeinflußt und durch die Anordnung einer Floatglasscheibe an der Außenseite der ESG- oder TVG-Scheibe werden diese Bolzen verdeckt, so daß der Gesamteindruck der verglasten Fassade nicht beeinträchtigt wird.

Die Bolzen sind an der Rückseite mit einem oder mehreren Drähten verbunden, die lose oder mit Spiel formschlüssig an der Fassadenkonstruktion, d.h. an Pfosten oder Riegeln, befestigt sind. Auf diese Weise werden auf die Halterung und die Durchgangsöffnungen in den ESG- oder TVG-Scheiben, in welchen die Bolzen angeordnet sind, keine Kräfte und Momente übertragen, solange die tragende Versiegelung intakt ist. Damit können pro Scheibe mehr als vier Halterungen angeordnet werden, ohne daß eine Zwängungsgefährdung an den Scheiben vorliegt. Die Anzahl der angebrachten Bolzen ist abhängig von der Größe und damit dem Gewicht der Scheiben. Bei Versagen der Verklebung wird das gesamte System durch die Bolzenhalterungen an einem Absturz gehindert.

Im Brandfall werden die Floatglasscheiben der Verglasung, d.h. die äußere Scheibe, die vor der ESG- oder TVG-Scheibe angeordnet ist, und ggf. Innenscheiben aus Floatglas schnell bersten, bevor die Verklebung versagt. Die äußere Floatglasscheibe kann dann wie eventuell innere Floatglasscheiben in Stücken herabfallen, was zulässig ist. Die ESG- oder TVG-Scheibe wird nach Versagen der Verklebung oder tragenden Versiegelung durch die Bolzen gehalten. Im Extremfall wird diese Scheibe bei Versagen der Durchgangsöffnungen ebenfalls zerstört und fällt dann zulässigerweise auch in Stücken von der Fassade herab. Damit wird eine unzumutbare Gefährdung von Person und Sachen verhindert.

Gemäß einer bevorzugten Ausführungsform bestehen die Bolzen und der oder die Drähte aus Edelstahl.

Gemäß einer bevorzugten Ausführungsform ist der Draht oder sind die Drähte an dem Bolzen angeschweißt oder eingehängt und an dem Fassadentragprofil angeschraubt, angeklemmt, angeschweißt, eingehängt od.dgl.

In der ESG-Scheibe sind vorzugsweise Durchgangsbohrungen zur Aufnahme der Bolzen ausgebildet. Die Durchgangsbohrungen können konisch oder abgestuft ausgebildet sein und entsprechend sind die Bolzen scheibenförmig, kegelstumpfförmig oder ebenfalls abgestuft ausgebildet, so daß sie, wenn sie von außen in die Durchgangsbohrungen eingesetzt werden, nicht durch die Durchgangsbohrungen hindurchtreten können.

Vorzugsweise ist in jedem Eckbereich der Verglasung je nach Bedarf mindestens ein Bolzen angeordnet, so daß gewährleistet ist, daß die Bolzen im Brandfall die Scheibe tragen.

Gemäß einer bevorzugten Ausführungsform ist die TVG- oder ESG-Scheibe mit der auf dieser an der Außenseite angeordneten Floatglasscheibe über eine Folie verklebt, so daß sich eine Verbundsicherheitsscheibe ergibt.

Vorzugsweise ist die Floatglasscheibe zur ESG- oder TVG-Scheibe oder zur Folie hin beschichtet, so daß gewährleistet ist, daß die Halterungen, d.h. die Bolzen und die Durchgangsöffnungen in den ESG- oder TVG-Scheiben, von der Außenseite der Fassade her nicht sichtbar sind.

Vorzugsweise ist der Bolzen mit Kunststoff ummantelt, um eine weichere Bettung der Scheibe zu erbringen.

Ausführungsbeispiele der Erfindung werden nachstehend anhand der Zeichnung näher erläutert. Es zeigt:

Fig. 1 einen Schnitt durch eine vor einer Brüstung angeordnete rahmenlose Verglasung,

Fig. 2 eine aus zwei Scheiben bestehende, rahmenlose Verglasung an einem Fassadentragprofil im Schnitt,

Fig. 3 eine als Stufenverglasung ausgebildete rahmenlose Verglasung an einem Fassadentragprofil im Schnitt,

Fig. 4 eine abgewandelte Ausbildung einer Absturzsicherung einer rahmenlosen Verglasung,

Fig. 5 eine Ansicht in Richtung Pfeil V von Fig. 4, und

Fig. 6 u. 7 weitere abgewandelte Ausführungsformen von rahmenlosen Verglasungen mit Absturzsicherungen.

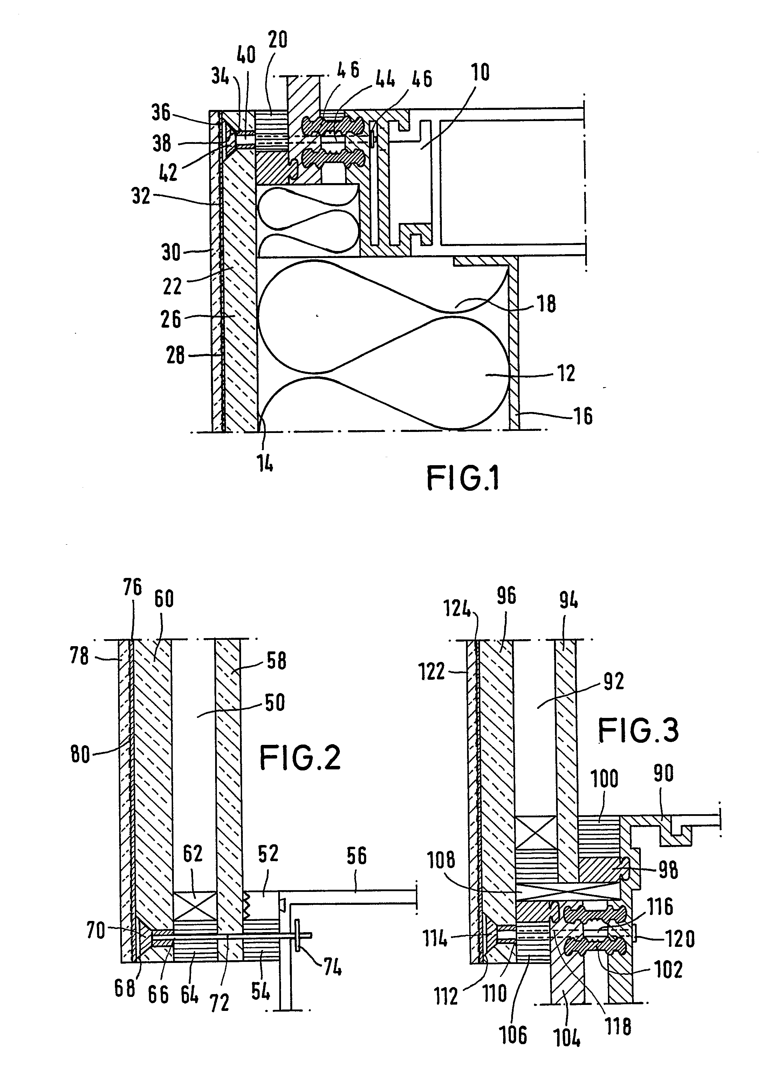

Fig. 1 zeigt im Schnitt ein Fassadentragprofil 10, beispielsweise einen Querriegel, an welchem ein Brüstungspaneel 12 befestigt ist. Das Brüstungspaneel 12 besteht aus einer äußeren Platte 14 und einer inneren Platte 16 mit dazwischen angeordnetem isolierendem Material 18.

An der Außenseite des Tragprofils 10 ist über eine tragende Versiegelung 20 eine Verglasung 22 befestigt. Zwischen der Verglasung 22 und dem Tragprofil 10 ist ein Abstandsprofil 24 angeordnet. Die Verglasung 22 besteht aus einer Scheibe 26 aus Einscheibensicherheitsglas (ESG) oder aus teilverspanntem Glas (TVG). An der Außenseite der Scheibe 26 ist eine Folie 28 angeordnet, die ihrerseits von einer Scheibe 30 aus Floatglas abgedeckt ist. Die Ausbildung der Folie 28 und deren Befestigung zwischen der Scheibe 22 und der Scheibe 30 ist bekannt. Die Scheiben 26 und 30 bilden mit der Folie 28 eine Verbundsicherheitsscheibe. Die Floatglasscheibe 30 ist an der an der Folie 28 anliegenden Fläche mit einer Beschichtung 32 versehen, so daß die Folie und die Scheibe 26 aus ESG nicht sichtbar sind.

Um zu gewährleisten, daß beispielsweise im Brandfall bei Versagen der tragenden Versiegelung 20 die Scheibe 26 aus ESG nicht im ganzen von der Fassade herabfallen kann, sind Absturzsicherungen 34 an der Scheibe 26 angeordnet. Die Scheibe 26 ist dazu mit Durchgangsbohrungen 36 versehen, die bei der in Fig. 1 gezeigten Ausführungsform einen konischen Bereich 38 mit anschließendem zylindrischen Bereich 40 aufweisen. In dem konischen Bereich 38 ist ein kegelstumpfförmiger Bolzen 42 aus Edelstahl aufgenommen. An der Rückseite sind an dem Bolzen 42 Drähte 44 ebenfalls aus Edelstahl befestigt, beispielsweise angeschweißt. Der Draht bzw. mehrere Drähte 44 sind durch die tragende Versiegelung 20 bzw. durch das Tragprofil 10 geführt. Am innenliegenden Ende des oder der Drähte 44 ist eine Scheibe 46 angeordnet, die einen meßbaren Abstand zu der Innenfläche des Tragprofils 10 aufweist, so daß der oder die Drähte 44 mit Spiel, d.h. lose, an dem Tragprofil 10 festgelegt sind. Damit ist es möglich, daß, solange die tragende Versiegelung 20 intakt ist, der Bolzen zusammen mit der Scheibe 26 Bewegungen durchführen kann, ohne daß eine Zwängungsgefährdung der Scheibe 26 auftritt. Erst wenn im Brandfall die tragende Versiegelung 20 versagt, wird der Draht 44 durch die Scheibe 26 nach außen gezogen, so daß die Verankerung 46 an dem Tragprofil 10 anliegt und der Draht gespannt wird. Damit wird die Scheibe 26 an dem Tragprofil 10 gehalten, wenn die tragende Versiegelung 20 ihre Tragfunktion nicht mehr erfüllen kann. Im Brandfall wird die Scheibe 30 aus Floatglas zerstört und kann in Bruchstücken von der Fassade herabfallen. Die Scheibe 26 aus ESG wird auch im Brandfall bis zu einem Temperaturgradient von 150 K ihre Form behalten. Sie wird dann von den Absturzsicherungen 34 an der Fassade festgehalten. Erst wenn der Temperaturgradient 150 K übersteigt und insbesondere durch die Absturzsicherung ein Wärmetransport von den Fassadentragprofilen 10 in die ESG-Scheibe 26 erfolgt, wird auch die Scheibe 26 bersten und in Bruchstücken von der Fassade herabfallen.

Fig. 2 zeigt eine Verglasung 50, die über ein Abstandsprofil 52 und eine tragende Versiegelung 54 an einem Fassadentragprofil 56 befestigt ist. Die Verglasung 50 besteht aus einer inneren Scheibe 58 aus Floatglas und einer äußeren Scheibe 60 aus ESG. Zwischen den Scheiben 58, 60 sind ein Abstandshalter 62 und eine tragende Versiegelung 64 angeordnet.

Um im Brandfall oder bei einem anderweitigen Versagen der tragenden Versiegelungen 54, 64 die Scheibe 60 aus ESG an einem Herabfallen im ganzen von der Fassade zu sichern, sind Absturzsicherungen 66 vorgesehen. Dazu sind in der Scheibe 60 aus konischen und zylindrischen Abschnitten zusammengesetzte Durchgangsbohrungen 68 ausgebildet. In dem konischen Bereich der Durchgangsbohrung 68 ist ein Metallbolzen 70 aufgenommen, der an der Rückseite mit Metalldrähten 72 verbunden ist. Die Metalldrähte 72 sind durch die tragende Versiegelung 64, die Floatglasscheibe 58 und die tragende Versiegelung 54 zu dem Fassadentragprofil 56 geführt, an welchem sie mit dem inneren Ende lose befestigt sind, so daß der Bolzen 70 zusammen mit den Scheiben Längenbewegungen durchführen kann. Erst bei Versagen der tragenden Versiegelung 54, 76 übernimmt der Bolzen 68 zusammen mit den Drähten 72 eine tragende Funktion, um die Scheibe 60 daran zu hindern, im ganzen von der Fassade herabzufallen. Am Ende der Drähte 72 innerhalb des Tragprofils 56 ist eine Scheibe oder eine Klammer 74 angeordnet. Es ist auch möglich, das Ende der Drähte 72 an dem Tragprofil 56 festzuschrauben oder anzuschweißen, wobei gewährleistet sein muß, daß der Draht um eine bestimmte Strecke aus dem Tragprofil herausgezogen werden kann.

Um die Absturzsicherungen 66, d.h. die Bolzen 70 und die Durchgangsbohrungen 68 in der ESG-Scheibe von außen unsichtbar zu machen, ist an der Außenseite der ESG-Scheibe 60 eine Folie 76 angeordnet, auf welcher wiederum eine Scheibe 78 aus Floatglas angeklebt ist. Die Scheibe 68 ist an der inneren Fläche, d.h. an der Fläche, die an der Folie 76 anliegt, mit einer farbigen Beschichtung 80 versehen, so daß die Teile der Verglasung 50 hinter der Scheibe 78 von außen nicht sichtbar sind.

Fig. 3 zeigt eine Ausführungsform analog der von Fig. 2, d.h. an einem Fassadentragprofil 90 ist eine Verglasung 92 bestehend aus einer inneren Floatglasscheibe 94 und einer äußeren ESG-Scheibe 96 über ein Abstandsprofil 98 und eine tragende Versiegelung 100 befestigt. Die ESG-Scheibe 96 ist flächenmäßig größer ausgebildet als die Floatglasscheibe 94, so daß sich eine Stufenverglasung 92 ergibt. An der Außenseite des Tragprofils 90 sind über Isolierschienen 102 Metallprofile 104 befestigt. An dem Metallprofil 104 ist über eine tragende Versiegelung 106 die ESG-Scheibe 96 angeordnet. Ein Abstandsprofil 108, das gleichzeitig eine Abstützung für die Scheibe 94 bildet, ist zwischen der ESG-Scheibe 96 und dem Tragprofil 90 vorgesehen.

Um die ESG-Scheibe 96 daran zu hindern, beispielsweise im Brandfall als ganzes von einer Fassade herabzufallen, sind Absturzsicherungen 110 vorgesehen. Dazu sind in der ESG-Scheibe 96 Durchgangsbohrungen 112 ausgebildet, in welchen hitzebeständige Metallbolzen 114 eingesetzt sind. Die Durchgangsbohrungen und die Metallbolzen sind vorzugsweise konisch ausgebildet. An der Rückseite des Metallbolzens 114 ist ein Draht 116 beispielsweise angeschweißt, der durch das Metallprofil 104 in das Tragprofil 190 geführt ist. An dem Draht 116 sind Klemmen oder Scheiben 118 und 120 befestigt, die im Abstand zu der Rückseite des Tragprofils 104 und der Innenseite des Tragprofils 90 angeordnet sind. Damit ist es möglich, daß der Draht 116 nach außen gezogen werden kann, um Bewegungen infolge Temperatur oder Windlasten der Scheibe 96 durchführen zu können, ohne daß über den Draht Spannungen in die Scheibe 96 übertragen werden.

Um die Absturzsicherung bestehend aus den Durchgangsbohrungen in der ESG-Scheibe 96 und dem Metallbolzen von außen nicht sichtbar werden zu lassen, ist an der Außenseite der ESG-Scheibe 96 eine Floatglasscheibe 122 mit dazwischen angeordneter Folie 124 angeordnet. Die Floatglasscheibe 122 ist vorzugsweise an der Innenfläche beschichtet.

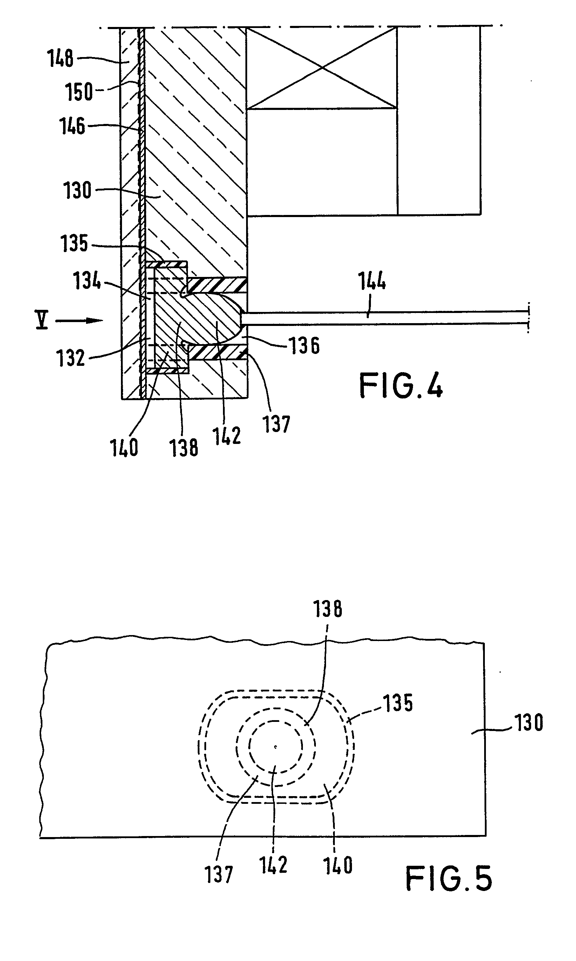

Fig. 4 zeigt eine ESG-Scheibe 130, in welcher eine abgestufte Bohrung 132 mit einem äußeren Bereich 134 mit größerem Durchmesser und einem inneren Bereich 136 mit geringerem Durchmesser ausgebildet ist. Die Wände der Bohrungsabschnitte 134 und 136 sind mit einem Elastomeren beschichtet. Innerhalb der Bohrung 134 ist ein Metallbolzen 138 aufgenommen, der aus einer langgestreckten Platte 140 mit etwa halbkreisförmigen Schmalseiten und einem kugelsegmentartigen inneren Abschnitt 142 besteht. Die Platte 140 liegt mit ihrer Rückseite auf der Schulter auf, so daß der Bolzen 138 nicht durch die Bohrung 132 gezogen werden kann. An der Rückseite ist an dem inneren Teil 142 des Bolzens 138 ein Edelstahldraht 144 mit einem Durchmesser von 1 bis 2 mm angeschweißt. Das innere Ende des Drahtes 144 ist mit Spiel formschlüssig an einem Fassadentragprofil festgelegt. Um die Bohrung 132 und den Bolzen 138 von außen nicht sichtbar zu machen, ist an der Außenseite der ESG-Scheibe 130 eine Folie 146 angeordnet, die mit einer Floatglasscheibe 148 verklebt ist. Die Floatglasscheibe 148 weist an der an der Folie 146 anliegenden Fläche eine Beschichtung 150 auf.

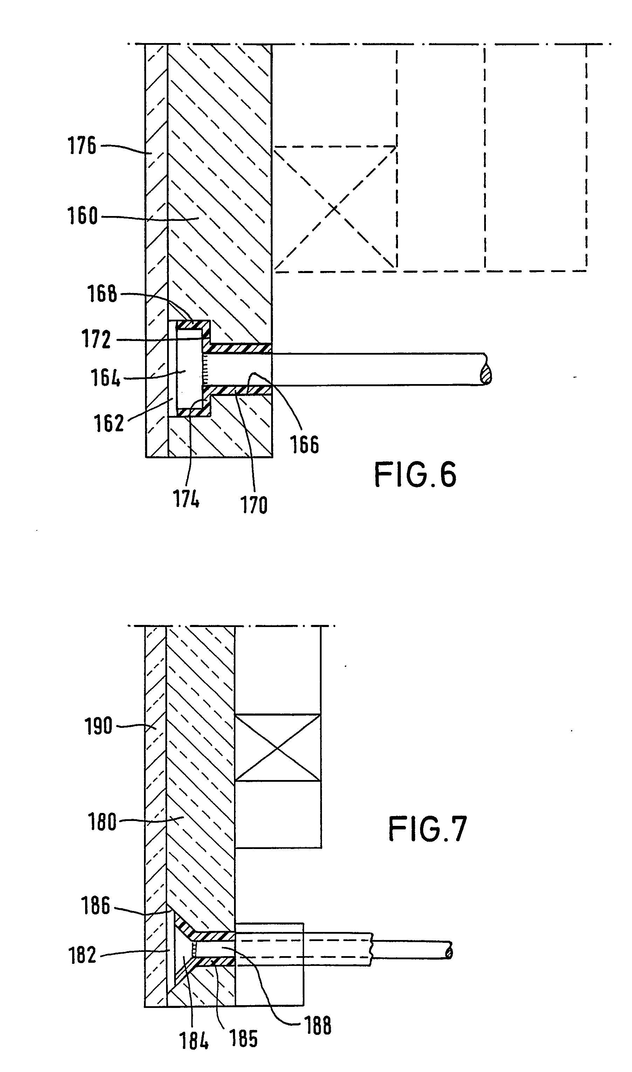

Fig. 6 zeigt eine ESG-Scheibe 160, die mit einer Durchgangsbohrung 162 ausgebildet ist. Die Durchgangsbohrung 162 besteht aus einem zylindrischen äußeren Bereich 164 und einem zylindrischen inneren Bereich 166, dessen Durchmesser geringer ist als der des äußeren Bereichs 164. Die zylindrischen Flächen der Bohrungsbereiche 164 und 166 sind mit einer elastomeren Beschichtung 168 bzw. 170 versehen. Ebenfalls ist die Ringschulter 172, die durch die Bohrungen 164 und 166 ausgebildet wird, mit einer Beschichtung 174 ausgebildet. Die Durchgangsbohrung 162 dient der Aufnahme eines Bolzens beispielsweise aus Edelstahl, um die Scheibe 160 an einem Herabstürzen von der Fassade zu sichern, bevor sie in Bruchstücke zerborsten ist. Um die Durchgangsbohrung 162 und einen aufgenommenen Bolzen abzudecken, ist vor der Scheibe 160 eine beschichtete Floatglasscheibe 176 angeordnet.

Fig. 7 zeigt eine Floatglasscheibe 180, die mit Durchgangsbohrungen 182 zur Aufnahme von Sicherungsbolzen 184 versehen ist. Die Durchgangsbohrung 182 besteht aus einem konischen äußeren Abschnitt 186 und einem zylindrischen inneren Abschnitt 188. Der Metallbolzen 184 ist kegelstumpfförmig ausgebildet, mit Kunststoff 185 ummantelt und stützt sich an der Mantelfläche der konischen Bohrung 186 ab. Die Anordnung der Scheibe 180, die an der Außenseite mit einer Floatglasscheibe 190 versehen ist, um die Durchgangsbohrungen und die Sicherungsbolzen abzudecken, sowie die Befestigung des Bolzens 184 an einem Fassadentragprofil ist entsprechend der Ausführungsform nach den Fig. 1 bis 3 ausgebildet. Der Kunststoff 185 erbringt eine weiche Bettung des Bolzens 184. Im Brandfall nach Zerstörung des Kunststoffs 185 bleibt dennoch der Formschluß des Bolzens 184 in der Scheibe 180 aufrechterhalten.

**Ansprüche**

1. Rahmenlose Verglasung (structural glazing), bestehend aus einer Scheibe aus Einscheibensicherheitsglas (ESG) oder teilvorgespanntem Glas (TVG) allein oder kombiniert mit einer oder mehreren Scheiben aus Floatglas, wobei die ESG- oder TVG-Scheibe insbesondere an der Außenseite der Verglasung angeordnet ist, und wobei die Befestigung über tragende Versiegelungen an Fassadentragprofilen erfolgt, dadurch **gekennzeichnet**, daß in der ESG-oder TVG-Scheibe (26, 60, 96, 130, 160, 180) mindestens ein Bolzen (42, 70, 114, 138, 184) aus nicht brennbarem oder hitzebeständigem Material formschlüssig angeordnet ist, daß der Bolzen über Draht (44, 72, 116, 144) od.dgl. lose und ohne starre Verbindung an einem Fassadentragprofil (10, 56, 90) befestigt ist, und daß an der Außenseite der ESG- oder TVG-Scheibe eine Floatglasscheibe (30, 78, 122, 148, 176, 190) angeklebt ist.

2. Rahmenlose Verglasung nach Anspruch 1, dadurch **gekennzeichnet**, daß der Bolzen und der oder die Drähte aus Edelstahl bestehen.

3. Rahmenlose Verglasung nach Anspruch 1 oder 2, dadurch **gekennzeichnet**, daß der Draht an den Bolzen angeschweißt oder eingehängt und an den Fassadentragprofilen angeschraubt, angeklemmt, angeschweißt, eingehängt od.dgl. ist.

4. Rahmenlose Verglasung nach einem der Ansprüche 1 bis 3, dadurch **gekennzeichnet**, daß an der TVG-oder der ESG-Scheibe Durchgangsbohrungen zur Aufnahme der Bolzen ausgebildet sind.

5. Rahmenlose Verglasung nach Anspruch 4, dadurch **gekennzeichnet**, daß die Durchgangsbohrungen konisch oder abgestuft und die Bolzen scheibenförmig, kegelstumpfförmig oder abgestuft ausgebildet sind.

6. Rahmenlose Verglasung nach einem der Ansprüche 1 bis 5, dadurch **gekennzeichnet**, daß in jedem Eckbereich der Verglasung mindestens ein Bolzen angeordnet ist.

7. Rahmenlose Verglasung nach einem der Ansprüche 1 bis 6, dadurch **gekennzeichnet**, daß die TVG- oder die ESG-Scheibe (26) mit der Floatglasscheibe (30) über eine Folie (28) verklebt ist.

8. Rahmenlose Verglasung nach einem der Ansprüche 1 bis 7, dadurch **gekennzeichnet**, daß die Floatglasscheibe (30) auf der zur ESG- oder TVG-Scheibe gerichteten Fläche eine Beschichtung (32) aufweist.

9. Rahmenlose Verglasung nach einem der Ansprüche 1 bis 8, dadurch **gekennzeichnet**, daß der an dem Bolzen befestigte Draht einen Durchmesser von 1mm bis 2mm aufweist.

10. Rahmenlose Verglasung nach einem der Ansprüche 1 bis 9, dadurch **gekennzeichnet**, daß der Bolzen (184) mit Kunststoff (185) ummantelt ist.

FIG.1

FIG.2

FIG.3

G 3670

148
150
146
130
135
134
V ⟶
132
136
140 138 142 137

## FIG.4

144

138
135
130
137 142 140

## FIG.5

176

160

168

172

164

162

174    170

166

# FIG.6

190

180

186

182

184   185

188

# FIG.7

G 3670

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| A | DE-U-8 701 693 (FLACHGLAS A.G.) * Seite 5, Absatz 5 - Seite 6, Absatz 1; Figuren 1,2 * | 1,4-8, 10 | E 06 B 3/54 E 04 B 2/96 |
| A | EP-A-0 136 064 (PILKINGTON) * Seite 4, Absatz 10 - Seite 7, Absatz 2; Figuren 1,2 * | 1,2,4,5 ,6 | |
| A | EP-A-0 201 212 (H.J. DUTTON) * Seite 3, Zeilen 1-21; Seite 4, Zeile 16 - Seite 5, Zeile 18; Seite 9, Zeile 23 - Seite 10, Zeile 7; Figuren 1,2 * | 1 | |
| A | US-A-3 473 431 (J.O. KING, Jr.) * Spalte 2, Zeilen 10-24; Spalte 4, Zeilen 14-27; Figuren 4,9 * | 1 | |
| P,A | EP-A-0 319 695 (METALLBAU KOLLER) * Spalte 8, Zeilen 2-45; Figur 7 * | 1,6 | |
| | | | RECHERCHIERTE SACHGEBIETE (Int. Cl.5) |
| | | | E 06 B E 04 F E 04 B F 16 B |

Der vorliegende Recherchenbericht wurde für alle Patentansprüche erstellt

| Recherchenort | Abschlußdatum der Recherche | Prüfer |
| --- | --- | --- |
| DEN HAAG | 17-01-1990 | VERVEER D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument